# EUROPÄISCHE PATENTSCHRIFT

(11) **EP 0 996 674 B1**
(45) Veröffentlichungstag und Bekanntmachung des Hinweises auf die Patenterteilung: **12.11.2003**
(21) Anmeldenummer: 98939553.8
(22) Anmeldetag: 29.06.1998
(51) Int. Cl.: C08L 5/00, C08L 101/00

(54) **THERMOPLASTISCHE MISCHUNG AUF 1,4-ALPHA-D-POLYGLUCANBASIS, VERFAHREN ZU DEREN HERSTELLUNG UND VERWENDUNG**
THERMOPLASTIC MIXTURE CONTAINING 1,4-ALPHA-D-POLYGLUCANE, METHOD FOR MAKING THE SAME AND USE THEREOF
MELANGE THERMOPLASTIQUE A BASE DE 1,4-ALPHA-D-POLYGLUCANE, SON PROCEDE DE FABRICATION ET SON UTILISATION

(30) Priorität: 09.07.1997 DE 19729273
(43) Veröffentlichungstag der Anmeldung: 03.05.2000
(73) Patentinhaber: Celanese Ventures GmbH, 65926 Frankfurt am Main (DE)
(72) Erfinder: BENGS, Holger, D-60598 Frankfurt am Main (DE); GRANDE, Jürgen, D-65812 Bad Soden (DE); BÖHM, Gitte, D-60439 Frankfurt am Main (DE)
(74) Vertreter: Luderschmidt, Schüler & Partner
(86) Internationale Anmeldenummer: EP9803960
(87) Internationale Veröffentlichungsnummer: WO99002600

(56) Entgegenhaltungen:
- EP-A- 0 327 505
- EP-A- 0 599 535
- EP-A- 0 709 030
- EP-A- 0 733 647
- DE-A- 1 720 172
- DE-A- 4 417 879
- DE-C- 4 420 223
- LEHNINGER, A. L.: "BIOCHEMISTRY" 1976 , WORTH PUBLISHERS , NEW YORK, NY XP002083919 siehe Seite 645-646
- MAHLER, H. R. AND CORDES, E. H.: "BIOLOGICAL CHEMISTRY" 1971 , HARPER & ROW , NEW YORK, NY XP002083920 siehe Seite 500-501

## Beschreibung

Die Erfindung bezieht sich auf thermoplastische Mischungen auf 1,4-α-D-Polyglucanbasis, die Herstellung solcher Mischungen sowie die Verwendung dieser Mischungen zur Herstellung von biologisch abbaubaren Formkörpern, wie Formteilen oder Folien. Insbesondere bezieht sich die vorliegende Erfindung auf derartige thermoplastische Mischungen, wobei das eingesetzte 1,4-α-D-Polyglucan biokatalytisch erzeugt worden ist.

In den letzten Jahren hat der Einsatz von Werkstoffen auf Basis von nachwachsenden Rohstoffen aufgrund verschiedener Vorteile zunehmend an Bedeutung und Umfang gewonnen. Solche Biopolymere, wie z.B. Stärke oder Protein etc., sind im Gegensatz zu den Polymeren auf Erdölbasis, wie z.B. Polyethylen, Polypropylen oder Polystyrol etc., biologisch abbaubar. Zudem sind Biopolymere ohne Beschränkung erhältlich, wohingegen Polymere auf Erdölbasis aufgrund der begrenzten Erdölvorkommen nur im endlichen Umfang zur Verfügung stehen.

Oftmals fallen Biopolymere als Neben- bzw. Abfallprodukte bei der Erzeugung von anderen Produkten an, z.B. im pflanzlichen Bereich als Gerüststoffe bei Pflanzen und der Gewinnung von Nahrungsmitteln.

Des weiteren sind Biopolymere CO₂ neutral, d.h. es entstehen bei ihrem Abbau keine schädlichen Nebenprodukte, die zum Treibhauseffekt beitragen.

Im Zuge des vermehrten Einsatzes von Biopolymeren, insbesondere Stärke, als natürliche und damit physiologisch verträgliche und abbaubare Werkstoffe für vielfältigste Anwendungsbereiche, wurden Verfahren entwickelt, die es ermöglichen, Stärke mittels der bekannten Kunststoffverarbeitungstechniken zu verarbeiten wie z.B. Spritzguß und Extrusion.

So beschreiben z.B. die EP 0 599 535, WO90/05161 und WO92/04408 Verfahren zur Herstellung von thermoplastischer Stärke aus nativer, d.h. natürlich vorkommender Stärke und deren Derivaten unter Zusatz von Wasser, Weichmachern und ggf. weiterer Additive unter Einwirkung von Wärme und mechanischer Energie sowie deren Verwendung zur Herstellung von Formkörpern.

Unter anderem ist die Verwendung von thermoplastischer Stärke zur Herstellung von Wursthüllen (EP 0 709 030) und Hüllen für die Verarbeitung von Fleisch (USP 2,729,565) bekannt. Auch hier wird native Stärke eingesetzt.

Trotz dieser erheblichen Vorteile der Biopolymere gegenüber den herkömmlichen synthetischen Polymeren konnte sich ihre Anwendung dennoch nicht uneingeschränkt durchsetzen. Ein wesentlicher Grund dafür ist, daß Biopolymere wie alle natürlich vorkommenden Substanzen erhebliche Schwankungen in Aufbau und Struktur aufweisen und daher die erforderliche Reproduzierbarkeit und damit gleichbleibende Produktqualität nicht gewährleistet ist.

So weist Stärke als einer der vielversprechenden Vertreter der nachwachsenden Rohstoffe, einen ausgesprochen inhomogenen Aufbau und Zusammensetzung auf. Je nach Herkunft (natürlichen Ursprung) der Stärke schwankt ihr Gehalt an ihren Bestandteilen Amylose und Amylopektin beträchtlich.

Zudem können die Amylose, ein lineares, 1,4 verknüpftes Poly-α-D-Glucan, die ein Molekulargewicht von etwa 50.000 - 150.000 Dalton hat, und Amylopektin, ein hochverzweigtes 1,4- und 1,6-verknüpftes Polyglucan, das ein Molekulargewicht von etwa 300.000 - 2.000.000 Dalton hat, breite Molekulargewichtsverteilungen aufweisen.

Die Übergänge von hochverzweigt zu linear sind fließend und daher kann eine Pflanze ein breites Spektrum unterschiedlich verzweigter Stärke aufweisen, was eine scharfe Abgrenzung nahezu unmöglich macht.

Je nach pflanzlicher Herkunft schwankt das Verhältnis von Amylose zu Amylopektin. Beispielsweise enthält Stärke aus Kartoffeln 20 Gew.-% Amylose und ca. 80 Gew.-% Amylopektin, wohingegen Stärke aus Mais ca. 50 Gew.-% Amylose und 50 Gew.-% Amylopektin aufweist. Darüber hinaus schwankt das Verhältnis innerhalb einer Pflanze je nach Bodenbeschaffenheit, Düngeraufnahme, saisonaler klimatischer Unterschiede etc..

Neben dieser ausgeprägten strukturellen Uneinheitlichkeit, die sich wie beschrieben in breiten Molekulargewichtsverteilungen oder Mischungen aus Polymeren unterschiedlicher räumlicher Anordnung ausdrücken kann, enthalten Biopolymere weitere Bestandteile wie niedermolekulare Verbindungen, z.B. Fette und Öle, die nur schwer von den Biopolymeren abtrennbar sind und sich bei der weiteren Verarbeitung nachteilig auswirken.

Es wurde daher versucht Biopolymere, z.B. Polysaccharide und Stärken, fermentativ unter Verwendung von Mikroorganismen herzustellen (WO95/31553).
Die so erhaltenen Biopolymere weisen jedoch ebenfalls eine breite Molekulargewichtsstreuung auf und können nicht definiert reproduziert werden.

Zudem werden die Biopolymere nach diesem Verfahren im Gemisch mit den verwendeten Mikroorganismen bzw. deren Reste sowie den Resten des für die Fermentation erforderlichen Nährmediums erhalten. Die Abtrennung, insbesondere wenn das Produkt intrazellulär anfällt und der Mikroorganismus erst aufgeschlossen werden muß, ist sehr aufwendig, wobei zum Teil Verunreinigungen nicht vollständig eliminiert werden können.

Zudem lassen sich auf fermentative Weise nur begrenzte Mengen Biopolymer herstellen, wofür u.a. eine sehr geringe Raum-Zeit-Ausbeute verantwortlich ist.

Es wurden auch Versuche unternommen, Stärken oder andere Biopolymere zu optimieren, indem die Pflanzen aus denen die Biopolymere gewonnen werden, gentechnisch modifiziert werden. So beschreibt z.B. WO94/03049 die Herstellung und Verwendung von einer hochamylosehaltigen Stärke, die aus gentechnisch verändertem Mais gewonnen werden kann. Dessen ungeachtet verbleiben die beschriebenen Nachteile hinsichtlich der Einheitlichkeit der natürlichen Polymere sowie hinsichtlich der Verunreinigungen mit anderen natürlichen Komponenten.

Von der Polymererarbeitung nach herkömmlichen Kunststoffverarbeitungstechniken ist jedoch bekannt, daß Reproduzierbarkeit und Qualität maßgeblich von der Einheitlichkeit und Reinheit der Ausgangsstoffe abhängt. Zur Gewährleistung von Produkten hoher Qualität müssen diese Ausgangsstoffe klar definierbar und charakterisierbar sein.

Es ist daher Aufgabe der vorliegenden Erfindung eine thermoplastische Mischung auf Basis von Biopolymeren zur Verfügung zu stellen, die die oben genannten Nachteile nicht aufweist und mit der reproduzierbar Formkörper mit gleichbleibender Qualität hergestellt werden können.

Insbesondere sollen die so herstellbaren Formkörper verbesserte Eigenschaften, wie ausgezeichnete mechanische Eigenschaften und gute Barriereeigenschaften gegenüber Gasen und Flüssigkeiten aufweisen.

Gelöst wird diese Aufgabe durch eine Mischung mit den Merkmalen des Anspruchs 1. Bevorzugte Ausführungsformen sind Gegenstand der abhängigen Patentansprüche.

Durch die Bereitstellung einer thermoplastischen Mischung erhältlich durch Mischen von 100 Gewichtsteilen eines biokatalytisch erzeugten wasserunlöslichen 1,4-α-D-Polyglucans (A) mit einer Polydispersität zwischen 1,1 und 3 und einem Molekulargewicht M_{w} zwischen 1 x 10³ und 5 x 10⁴, bis zu 400 Gewichtsteilen eines thermoplastisch verarbeitbaren, von (A) verschieden polymeren Materials (B), wobei der Wassergehalt von (A) und (B) rechnerisch auf null Prozent korrigiert ist, Wasser (C) in einer zur Plastifizierung ausreichenden Menge, mindestens einen Weichmacher (D) in einer Menge im Bereich von 10 Gewichtsteilen bis zur Hälfte der Summe der Gewichtsteile (A) und (B), und gegebenenfalls bis zu (A)+(B) Gewichtsteilen weiterer üblicher Zusätze, gelingt es in nicht ohne weiteres absehbarer Weise eine thermoplastisch verarbeitbare Mischung auf Basis von Biopolymeren zu schaffen, die über eine ausgezeichnete thermoplastische Verarbeitbarkeit verfügt, reproduzierbar und in gleichbleibender Qualität erhältlich ist und damit zu Formteilen mit ebenfalls gleichbleibender Qualität verarbeitet werden kann.

Aufgabe der Erfindung war auch ein Verfahren zur Herstellung einer thermoplastischen Mischung für Extrudate oder Granulate sowie die Verwendung der thermoplastischen Mischung.

Das erfindungsgemäß als Komponente (A) eingesetzte 1,4-α-D-Polyglucan wird biokatalytisch erzeugt.

1,4-α-Polyglucan ist wie Amylose aus 1,4-α-glykosidisch verknüpften Glucoseeinheiten aufgebaut und linear.

Im Gegensatz zur Amylose, die auch im höhermolekularen Zustand sehr gut wasserlöslich ist, ist entsprechendes biokatalytisch erzeugtes 1,4-α-D-Polyglucan in Wasser unlöslich.

Anders als Stärke bzw. Amylose aus nativer Stärke, die je nach Pflanzensorte, Herkunftsort, Anbaubedingungen etc. in sehr unterschiedlicher Qualität anfallen, ist biokatalytisch erzeugtes 1,4-α-Polyglucan von gleichbleibender, einheitlicher Qualität.

Ein weiterer Vorteil gegenüber nativer Stärke ist, daß biokatalytisch hergestelltes 1,4-α-Polyglucan anders als Stärke nicht in Form von Körnern anfällt, die eine gleichmäßigen Aufschluß bei der thermoplastischen Verarbeitung erschweren bzw. bei ungenügenden Aufschluß zu Produkten niederer Qualität führen können.

Aufgrund der sehr geringen Löslichkeit in Wasser ist 1,4-α-Polyglucan ein idealer natürlicher Werkstoff für Anwendungen, in denen die Quellbarkeit oder die Wasseraufnahme kritische Parameter darstellen, z.B. bei Lebensmittelverpackungen.

Zusammenfassend ist festzustellen, daß biotechnisch erzeugtes 1,4-α-Polyglucan im Gegensatz zu Stärke in homogener Qualität anfällt, besser verarbeitbar ist und damit zu Produkten hoher und gleichbleibender Güte führt.

Durch Biokatalyse, auch Biotransformation genannt, hergestelltes 1,4-α-D-Polyglucan bedeutet im Rahmen der Erfindung, daß das 1,4-α-D-Polyglucan durch katalytische Reaktion von monomeren Grundbausteinen wie oligomeren Sacchariden, z.B. von Mono- und Discchariden, hergestellt wird, indem ein sogenannter Biokatalysator, üblicherweise ein Enzym, unter geeigneten Bedingungen verwendet wird.

Durch biokatalytische Verfahren gewonnenes Polyglucan zeichnet sich durch eine sehr enge Molekulargewichtsverteilung aus.

Ein Maß für die Molekulargewichtsverteilung ist die Uneinheitlichkeit U mit U = (M_{w}/Mₙ)-1, wobei M_{w}/Mₙ auch als Polydispersität bezeichnet wird.

Liegen in einem Polymer nur Polymerketten mit einheitlicher Länge vor, so sind M_{w} und Mₙ identisch und M_{w}/Mₙ ist 1. Für die Uneinheitlichkeit U ergibt sich in diesem Fall ein Wert von 0. D.h. je weiter sich der Wert für U von Null entfernt, desto uneinheitlicher ist das Polymer.

Die erfindungsgemäß verwendeten 1,4-α-D-Polyglucane weisen üblicherweise einen Wert U von etwa 0,1 - 2,0, vorzugsweise etwa 0,2 - 1 und besonders bevorzugt von etwa 0,2 - 0,8 auf. Dies entspricht Polydispersitäten von etwa 1,1 - 3,0, 1,2 - 2 und 1,2 - 1,8.

Im Vergleich dazu werden bei radikalischer Polymerisation Polydispersitäten im Bereich von 2 - 10, bei der sogenannten lebenden anionischen Polymerisation von 1,1 - 1,8 und bei Polykondensation von 2 - 10 erhalten.

Die erfindungsgemäß verwendeten 1,4-α-D-Polyglucane zeigen somit Molekulargewichtsverteilungen, die mit denen von synthetisch erzeugten Polymeren vergleichbar sind.

Des weiteren können je nach Bedarf Polyglucane mit unterschiedlichen Molekulargewichten in definierter Weise hergestellt werden, die zudem keine Verzweigungen und Vernetzungungen aufweisen und einheitlich linear sind.

Verunreinigungen wie Öle oder Fette sowie Reste von Mikroorganismen etc., wie sie bei nativer Stärke oder fermentativer Bildung unvermeidlich anfallen, sind aufgrund der Reaktionsbedingungen ausgeschlossen.

Für die Herstellung des erfindungsgemäß eingesetzten Polyglucans kann prinzipiell jedes Enzym verwendet werden, das aus geeigneten Grundbausteinen 1,4-α-Polyglucan bildet. Geeignet sind z.B. Glykosyltransferasen wie Amylosucrasen und Phosphorylasen.

Ein Verfahren zur biokatalytischen Herstellung von 1,4-α-Polyglucan ist z.B. in der WO95/31553 beschrieben.

Gemäß diesem Verfahren wird eine Saccharoselösung mit Amylosucrase versetzt, wobei unter Spaltung der Zuckerbindung direkt 1,4-α-Polyglucan und Fructose gebildet werden. Die als Nebenprodukt gebildete Fructose kann leicht abgetrennt und weiterverwendet werden.

Erfindungsgemäß enthält die thermoplastische Mischung 20 - 100 Gewichtsteile, vorzugsweise 40 - 80 Gewichtsteile 1,4-α-Polyglucan.

Die Molekulargewichte M_{w} der erfindungsgemäß verwendeten Polyglucane können je nach Verwendungszweck über einen weiten Bereich variieren.

Es werden 1,4-α-Polyglucane mit Molekulargewichten M_{w} im Bereich von 1 x 10³ bis 5 x 10⁴ und bevorzugt von 1 x 10⁴ bis 5 x 10⁴ eingesetzt.

Das als Komponente (B) eingesetzte von Komponente (A) verschiedene, thermoplastisch verarbeitbare polymere Material ist eine optionale Komponente.

Es handelt sich hierbei vorzugsweise um ein im wesentlichen biologisch abbaubares, polymeres Material, welches in Mengen bis zu 400 Gewichtsteilen bezogen auf Komponente A in der Mischung enthalten sein kann. Auch Mischungen von zwei oder mehr solcher Verbindungen kommen als Komponente (B) in Frage.

Für den Fall, daß die thermoplastische Mischung zur Herstellung von Lebensmittelverpackungen etc. verwendet werden soll, wird vorzugsweise als Komponente (B) ein physiologisch verträgliches polymeres Material gewählt.

Als Komponente (B) können insbesondere auch eine oder mehrere Stärken, eine oder mehrere ihrer Derivate oder Mischungen von Stärken und Stärkederivaten verwendet werden. Es kann sich hierbei um native, chemisch modifizierte, fermentative oder rekombinante Stärke und/oder Derivate der genannten Stärken handeln.

Eine wichtige Gruppe von Stärken umfaßt die aus pflanzlichen Rohstoffen gewonnenen Stärken. Hierzu zählen unter anderem Stärken aus Knollen, wie Kartoffeln, Maniok, Maranta, Batata, aus Samen wie Weizen, Mais, Roggen, Reis, Gerste, Hirse, Hafer, Sorghum, aus Früchten, wie Kastanien, Eicheln, Bohnen, Erbsen, u. a. Hülsenfrüchten, Bananen, sowie aus Pflanzenmark, z.B. der Sagopalme.

Die im Rahmen der Erfindung verwendbaren Stärken bestehen im wesentlichen aus Amylose und Amylopektin, in wechselnden Mengen-Verhältnissen.

Besonders gute Ergebnisse erzielt man unter anderem mit Stärken aus Kartoffeln (z.B. Toffena der Fa. Südstärke) und Mais (z.B. Maize Starch der Fa. National Starch).

Die Molekulargewichte der erfindungsgemäß nützlichen Stärken können über einen weiten Bereich variieren. Einsetzbar sind für die erfindungsgemäße thermoplastischen Mischung z.B. solche Stärken, die im wesentlichen aus einem Gemisch von Amylose und Amylopektin bestehen, vorzugsweise mit Molekulargewichten M_{w} im Bereich zwischen 5x10⁴ und 1x10⁷. Bevorzugt werden insbesondere längerkettige Polymere mit Molekulargewichten M_{w} zwischen 1x10⁶ und 5x10⁶.

Neben Stärken nativen pflanzlichen Ursprungs können auch solche Stärken, die chemisch modifiziert sind, fermentativ gewonnen wurden oder rekombinanten Ursprungs sind verwendet werden.

Unter "chemisch modifizierten Stärken" versteht die Erfindung solche Stärken, bei denen auf chemischem Wege die Eigenschaften im Vergleich zu den natürlichen Eigenschaften verändert wurden. Dies wird im wesentlichen durch polymeranaloge Umsetzungen erreicht, bei denen Stärke mit mono-, bi- oder polyfunktionellen Reagenzien bzw. Oxidationsmitteln behandelt wird. Dabei werden vorzugsweise die Hydroxygruppen der Polyglucane der Stärke durch Veretherung, Veresterung oder selektive Oxidation umgewandelt. Eine weitere Möglichkeit besteht in einer Modifizierung, die auf einer radikalisch initiierten Propfcopolymerisation von copolymerisierbaren ungesättigten Monomeren auf das Stärkerückgrat beruht.

Zu besonderen chemisch modifizierten Stärken gehören unter anderem Stärkeester, wie Xanthogenate, Acetate, Phosphate Sulfate, Nitrate, Stärkeether, wie z. B. nichtionische, anionische oder kationische Stärkeether, oxidierte Stärken, wie etwa Dialdehydstärke, Carboxystärke, Persulfat-abgebaute Stärken und ähnliche Substanzen. Stärken, die mit anionischen Gruppen oder kationischen Gruppen oder auch nicht-ionischen Gruppen modifiziert wurden.

"Fermentative Stärken" sind im Sprachgebrauch der Erfindung Stärken, die durch fermentative Prozesse unter Verwendung in der Natur vorkommender Organismen, wie Pilzen, Algen oder Bakterien gewonnen werden oder unter Einschaltung und Mithilfe von fermentativen Prozessen gewonnen werden können. Beispiele für Stärken aus fermentativen Prozessen umfassen neben anderen Gum Arabicum und verwandte Polysaccharide (Gellan Gum, Gum Ghatti, Gum Karaya, Gum Tragacanth), Xanthan, Emulsan, Rhamsan, Wellan, Schizophyllan, Polygalacturonate, Laminarin, Amylose, Amylopektin und Pektine.

"Stärken rekombinanten Ursprungs" oder "rekombinante Stärken" meint im einzelnen Stärken, die durch fermentative Prozesse unter Verwendung in der Natur nicht vorkommender Organismen, aber unter Zuhilfenahme von gentechnischen Methoden modifizierten natürlichen Organismen, wie Pilzen, Algen oder Bakterien, gewonnen werden oder unter Einschaltung und Mithilfe von fermentativen Prozessen gewonnen werden können. Beispiele für Stärken aus fermentativen, gentechnisch modifizierten Prozessen sind neben anderen Amylose, Amylopektin und weitere Polyglucane.

Schließlich lassen sich auch unter Verwendung von Derivaten der einzelnen genannten Stärken vorteilhafte thermoplastische Mischungen erhalten. Dabei bedeuten die Begriffe "Derivate von Stärken" oder "Stärkederivate" ganz allgemein modifizierte Stärken, d. h. solche Stärken, bei denen zur Veränderung ihrer Eigenschaften das natürliche Amylose/Amylopektin-Verhältnis verändert wurde, eine Vorverkleisterung durchgeführt wurde, die einem partiellen hydrolytischen Abbau unterzogen wurden oder die chemisch derivatisiert wurden.

Besonders günstige thermoplastische Mischungen werden auch erhalten, wenn als Komponente (B) Stärken eingesetzt werden, die einen möglichst geringen Anteil anderer Verbindungen, die nicht den Sacchariden zuzurechnen sind (z.B. Proteine, Fette, Öle), aufweisen (z.B. insbesondere Kartoffelstärke) und/oder ionische Stärken verwendet werden.

Zu im Rahmen der Erfindung mit Erfolg einsetzbaren Komponenten (B) gehören auch Proteine. Beispiele dafür sind unter anderem Gelatine, pflanzliche Proteine, wie Sonnenblumenprotein, Sojaprotein, Weizenprotein, Baumwollsamenprotein, Erbsenprotein, Erdnußprotein, Rapssamenprotein, Plasmaproteine, Eiweiß, Eigelb und ähnliche.

Günstige Mischungen ergeben auch Zusätze von Zein, Gluten (Mais, Kartoffel), Albumin, Casein, Kreatin, Kollagen, Elastin, Fibrin und/oder Molkeprotein.

Von Interesse als Komponente B) sind auch Polysaccharide.
Vorzugsweise werden wasserlösliche Polysaccharide wie Alginsäure und ihre Salze, Carrageenane, Furcellaran, Guar Gum, Agar-Agar, Gum Arabicum und verwandte Polysaccharide (Gum Ghatti, Gum Karaya, Gum Tragacanth), Tamarind Gum, Xanthan Gum, Aralia Gum, Johannesbrot Gum ('locust bean gum'), Arabinogalactan, Pullulan, Chitosan, Dextrine, Cellulose eingesetzt.

Günstig können sich auch Zusätze von Lentinan, Laminarin, Chitin, Heparin, Inulin, Agarose, Galactane, Hyaluronsäure, Dextranen, Dextrinen, Poly-ε-caprolacton und/oder Glykogen auswirken.

Die erfindungsgemäße thermoplastische Mischung wird rechnerisch bezüglich der Komponenten (A) und (B) auf einen Wassergehalt von Null Prozent korrigiert. D. h., der Wassergehalt der Komponenten (A) und (B) wird bestimmt und bei der Bemessung der eingesetzten Gewichtsteile entsprechend abgezogen, aber bei der Bemessung der Komponente (C) berücksichtigt.

Die Komponente (C), Wasser, der erfindungsgemäßen Mischung ist eine essentielle Komponente.

Die Menge an Wasser, die für die Plastifizierung notwendig ist, kann je nach Art der eingesetzten Mischung in einem weiten Bereich variieren.

Ist die Menge an zugesetztem Wasser zu gering, so ist die Destrukturierung und Homogenisierung der Mischung unzureichend. Ist der Wassergehalt zu hoch, besteht die Gefahr, daß die Viskosität der Mischung zu niedrig ist.
Im allgemeinen ist Wasser in einer Menge von 1 Gew.-Teil bis zu Dreiviertel, insbesondere bis zur Hälfte, der Summe der Gewichtsteile (A) und (B) in der Mischung der Erfindung ausreichend.
Bevorzugte Wassergehalte liegen etwa zwischen 5 und ((A)+(B))/1,3 Gewichtsteilen, besonders bevorzugt sind Wasseranteile zwischen 10 und ((A)+(B))/1,3 Gewichtsteilen.

In diesen bevorzugten Bereichen findet eine optimale Plastifizierung der Mischung, d. h. Destrukturierung der Stärke, Homogenisierung der Mischung sowie deren Thermoplastifizierung statt.

Die Wassermenge (C) beinhaltet neben tatsächlich zugefügtem Wasser auch die rechnerisch zu berücksichtigenden Wassergehalte anderer Komponenten, insbesondere die Menge von in den Komponenten (A) und (B) gebundenem oder enthaltenem Wasser.

Die Natur der Komponente (C) ist im wesentlichen nicht weiter kritisch. Man kann VE-Wasser, deionisiertes Wasser aber auch genauso gut Leitungswasser oder Wasser anderen Ursprungs einsetzen, sofern der Gehalt des Wassers an Salzen oder anderen Fremdstoffen im Hinblick auf die beabsichtigte Verwendung tolerabel ist.

Die Komponente (D) ist essentiell in der erfindungsgemäßen Mischung enthalten.

Ein oder mehrere Weichmacher sind in der Komposition der Erfindung in einer Menge im Bereich von 10 Gew.-Teilen bis zur Hälfte der Summe der Gewichtsteile (A) und (B) enthalten. Liegt der Gehalt an weichmachenden Verbindungen unterhalb von 10 Gewichtsteilen, so ist die Plastifizierung nicht ausreichend, selbst bei höheren mechanischen und/oder thermischen Energien. Überschreitet der Weichmachergehalt eine Menge die der Hälfte der Summe der Gewichtsteile (A) und (B) entspricht, wird keine nennenswert bessere Plastifizierung der Mischung beobachtet.

Günstig sind Weichmachermengen im Bereich von 12,5 bis ((A)+(B))/2 Gewichtsteilen, besonders bevorzugt sind Gehalte an Weichmachern im Bereich von 15 bis ((A)+(B))/4 Gewichtsteilen.

Der jeweils optimale Gehalt an Weichmacher richtet sich nach den übrigen Komponenten und sollte zweckmäßiger Weise für jede Formulierung separat bestimmt werden.

Einsetzbar sind alle indifferenten, vorzugsweise organischen, Substanzen mit im allgemeinen geringem Dampfdruck, welche ohne chemische Reaktion, vorzugsweise durch ihr Löse- und Quellvermögen, aber auch ohne ein solches, mit den Komponenten (A) und gegebenenfalls (B) in physikalische Wechselwirkung treten und ein homogenes System mit diesen bilden.

Die erfindungsgemäß einzusetzende Komponente (D) verleiht der Mischung vorzugsweise eine erniedrigte Einfriertempemperatur, erhöhtes Formveränderungsvermögen, erhöhte elastische Eigenschaften, verringerte Härte und ggf. gesteigertes Haftvermögen.

Bevorzugte Weichmacher gemäß der Erfindung sind geruchlos, farblos, licht-, kälteund wärmebeständig, nur wenig bis gar nicht hygroskopisch, wasserbeständig, nicht gesundheitsschädlich, schwer brennbar und möglichst wenig flüchtig, neutral reagierend, mit Polymeren und Hilfsstoffen mischbar und weisen ein gutes Gelierverhalten auf. Insbesondere sollen sie gegenüber den Komponenten A) und gegebenenfalls B) Verträglichkeit, Geliervermögen und weichmachende Wirksamkeit aufweisen.

Weiter sollen die erfindungsgemäß als Komponente D) einzusetzenden Verbindungen eine geringe Migration aufweisen, was insbesondere für Anwendungen der erfindungsgemäßen Formkörper im Lebensmittelbereich von Bedeutung ist.

Zu besonders bevorzugten weichmachenden Komponenten D) gehören unter anderem Dimethylsulfoxid, 1,3-Butandiol, Glyzerin, Ethylenglykol, Propylenglykol, Diglyzerid, Diglycolether, Formamid, N,N-Dimethylformamid, N-Methylformamid, Dimethylacetamid, N-Methylacetamid und/oder N,N'-Dimethylharnstoff.

Besonders vorteilhaft sind auch Polyalkylenoxide, Glycerinmono-, di-, oder -triacetat, Sorbitol, oder andere Zuckeralkohole, wie Erythrit, Zuckersäuren, Saccharide, wie Glucose, Fructose oder Saccharose, sowie Zitronensäure und seine Derivate.

Die Komponente (E) der erfindungsgemäßen Mischung ist optional. Es kann sich um einen oder mehrere Stoffe handeln, welche insgesamt als Komponente (E) in Mengen bis zu ((A)+(B)) Gewichtsteilen, vorzugsweise nicht mehr als ((A)+(B))/2 Gewichtsteilen, einsetzbar sind.

Zu üblichen Zuschlagstoffen oder Additiven gehören unter anderem Füllstoffe, Gleitmittel, die von den unter (D) genannten Weichmachern verschieden sind, Flexibilisierungsmittel, Pigmentierungsmittel, Farbstoffe, Entformungsmittel und andere.

Als Füllstoff geeignet sind beispielsweise synthetische Polymere, die nahezu in der Mischung löslich sind, wie etwa auf Milchsäure basierende Polymere, wie ® Lacea der Firma Mitsui, ® Resomer der Firma Boehringer Ingelheim, sowie weitere Polymere auf der Basis von Milchsäure und artverwandte Polymere der Milchsäure, der Firmen Wako Pure Chemical Industries Ltd., Medisorb Co., Birmingham Polymers, Inc., Polysciences Inc., Purac Biochem BV, Ethicon, Cargill oder Chronopol, wobei einsichtig ist, daß diese Aufzählung nicht einer absoluten Vollständigkeit entsprechen kann oder Blends von synthetischen Polymeren mit natürlichen Polymeren z.B. Mater-Bi der Fa. Novamont.

Weiter wird vorgeschlagen, mindestens einen anorganischen Füllstoff, wie beispielsweise Magnesiumoxid, Aluminiumoxid, SiO₂, TiO₂ usw. zuzusetzen.

Zum Einfärben der Mischung eignen sich insbesondere organische oder anorganische Pigmente, besonders auch Perlglanzpigmente, die überwiegend auf Silikatstrukturen basieren, und daher biokompatibel sind, also als unbedenklich für lebende Organismen und prinzipiell als eßbar einzustufen sind und in Mengen zwischen 0,001 und 10 Gewichtsteilen eingesetzt werden können.

Zur Verbesserung der Fliesseigenschaften eignen sich insbesondere tierische oder pflanzliche Fette und/oder Lecithine, die vorzugsweise in hydrogenierter Form verwendet werden, wobei diese Fette und sonstigen Fettsäurederivate vorzugsweise einen Schmelzpunkt von größer 50 °C aufweisen.

Um die Wasserbeständigkeit der thermoplastisch verarbeitbaren Mischung während und nach der Verarbeitung zu erhöhen, kann dem Gemisch ein Vernetzungsmittel in untergeordneten Mengen zugesetzt werden, um die Stärke chemisch zu modifizieren. Vorzugsweise werden hierzu Alkylsiloxane in Mengen bis zu 5 Gewichtsteilen eingesetzt.

Als Vernetzungsmittel eignen sich unter anderem auch zwei- oder mehrwertige Carbonsäuren sowie deren Anhydride, Säurehalogenide von zwei- oder mehrwertigen Carbonsäuren, Säureamide von zwei- oder mehrwertigen Carbonsäuren, Derivate von zwei- oder mehrwertigen anorganischen Säuren, Dialdehyde, insbesondere Glyoxal und Glutardialdehyd, Epoxide, Diepoxide, Ethylenglycoldiglycidylether, Formaldehyd und/oder Harnstoffderivate, Divinylsulfone, Diisocyanate, Isocyanate, Oxoverbindungen und Cyanamid, wobei sich diese Verbindungen auch besonders zur chemischen Modifizierung im Anschluß an die thermoplastische Verarbeitung eignen und somit zur weiteren Verbesserung insbesondere der mechanischen Eigenschaften beitragen können.

Die für die einzelnen Komponenten (E) angegebenen Gewichtsteile können je nach Bedarf variieren.

Gemäß einer weiteren Ausführungsform wird der erfindungsgemäßen thermoplastischen Masse ein Phosphat zugesetzt. Die aus derartigen Massen erhaltenen Formteile zeichnen sich durch hervorragende mechanische Eigenschaften aus. Zudem kann die Flammbeständigkeit und Temperaturbeständigkeit der Formteile verbessert werden.

Die Phosphate werden im allgemeinen in einer Menge von 0,01 Gew.-Teilen bis ((A)+(B))/10 Gew.-Teilen, insbesondere 0,1 Gew.-Teilen bis ((A)+(B))/20 Gew.-Teilen zugesetzt.

Unter dem Begriff "Phosphate" werden im Rahmen der Erfindung Salze und Ester der verschiedenen Phosphorsäuren verstanden. Bei weitem bevorzugt sind für die Erfindung allerdings die Salze der verschiedenen Phosphorsäuren. Erfindungsgemäß können auch Gemische von ein oder mehreren Salzen und/oder Ester der verschiedenen Phosphorsäuren zugesetzt werden.

Beispiele für geeignete Phosphate sind unter anderem Ortho-Phosphate der allg. Formeln M^{l}H₂PO₄ (z.B. NaH₂PO₄) und M^{ll}(H₂PO₄)₂ [z.B. Ca(H₂PO₄)₂], sekundäre Ortho-Phosphate der allgemeinen Formeln M^{l}₂HPO₄ oder M^{ll}HPO₄ (z.B. K₂HPO₄, CaHPO₄) oder tertiäre Ortho- Phospate der allgemeinen Formeln M^{l}₃PO₄ oder M^{ll}₃(PO₄)₂ [z.B. Na₃PO₄, Ca₃(PO₄)₂], wobei M^{l} für ein einwertiges Kation wie beispielsweise +NRR'R"R"', worin R, R', R" und R'" unabhängig voneinander gleich oder verschieden für Wasserstoff, (C₁-C₈)-Alkyl, linear oder verzweigt, (C₄-C₈)-Aryl, vorzugsweise Phenyl stehen, Alkalimetallion, bevorzugt Na⁺ oder K⁺, M^{ll} für ein zweiwertiges Kation, vorzugsweise Erdalkalimetallion, besonders bevorzugt Ca²⁺ steht. Von besonderem Interesse ist ferner die sich von den sauren Salzen der Orthophosphorsäure ableitende Gruppe der beim Erhitzen durch Wasseraustritt entstehenden kondensierten Phosphate, welche sich wiederum in Metaphosphate (systematische Bezeichnung: cyclo-Polyphosphate) und Polyphosphate (systematische Bezeichnung: catena-Polyphosphate) unterteilen lassen.

Zu bevorzugten Vertretern sind neben anderen das Grahamsche Salz, Kurrolsche Salz und Maddrellsche Salz sowie Schmelz- oder Glühphosphate zu zählen.

Besonders zweckmäßig sind unter anderem Metaphosphate der allgemeinen Formel M^{l}ₙ[PₙO₃ₙ], worin M^{l} ein einwertiges Kation, bevorzugt Metallion, zweckmäßig Alkalimetallion, bevorzugt Na⁺ oder K⁺, oder ⁺NRR'R"R"', worin R, R', R" und R"' unabhängig voneinander gleich oder verschieden für Wasserstoff, (C₁-C₈)-Alkyl, linear oder verzweigt, (C₄-C₈)-Aryl, vorzugsweise Phenyl, steht und n eine ganze natürliche positive Zahl bedeutet, vorzugsweise im Bereich zwischen 3 und 10. Hiervon wiederum sind solche Metaphosphate zu bevorzugen, worin n 3, 4 oder 5 und M' Natrium oder Kalium ist. Am meisten bevorzugt sind Natriumtrimetaphosphat, Natriumtetrametaphosphat und Natriumpentametaphosphat.

Vorteilhafte Mischungen ergeben sich auch mit Polyphosphaten der allgemeinen Formel M^{l}ₙ₊₂[PₙO₃ₙ₊₁] oder M^{l}ₙ[H₂ₙPₙO₃ₙ₊₁], worin M^{l} ein einwertiges Kation, bevorzugt Metallion, zweckmäßig Alkalimetallion, bevorzugt Na⁺ oder K⁺, oder ⁺NRR'R"R"', worin R, R', R" und R"' unabhängig voneinander gleich oder verschieden für Wasserstoff, (C₁-C₈)-Alkyl, linear oder verzweigt, (C₄-C₈)-Aryl, vorzugsweise Phenyl, steht und n eine ganze natürliche positive Zahl größer 2 ist. Bevorzugt hiervon sind Natrium und Kaliumpolyphosphate, bei denen n > 10 ist.

Es können auch Mischungen mit günstigen Eigenschaften erhalten werden, wenn Polyphosphate der allgemeinen Formel M^{l}ₙ₊₂[PₙO₃ₙ₊₁], worin M^{l} ein einwertiges Kation, bevorzugt Metallion, zweckmäßig Alkalimetallion, bevorzugt Na⁺ oder K⁺, oder ⁺NRR'R''R''', worin R, R', R" und R"' unabhängig voneinander gleich oder verschieden für Wasserstoff, (C₁-C₈)-Alkyl, linear oder verzweigt, (C₄-C₈)-Aryl, vorzugsweise Phenyl, steht und n eine ganze natürliche positive Zahl im Bereich zwischen 3 und 10 ist, eingesetzt werden. Unter anderem ist hiervon Pentanatriumtripolyphosphat bevorzugt.

Weiter ist die thermoplastische Mischung gemäß der Erfindung in besonderer Ausführungsform dadurch ausgezeichnet, daß das Phosphat ein Alkalisalz eines Metaphosphats oder Polyphosphats ist.

Eine weitere günstige Abwandlung der erfindungsgemäßen thermoplastischen Mischung ergibt sich dadurch, daß als Phosphat Natriumtrimetaphosphat, Natriummetaphosphat, Natriumpolyphosphat und/oder Natriumhexametaphosphat, vorzugsweise Natriumpolyphosphat zugesetzt wird.

Die genannten Phosphate können einen unterschiedlichen Hydratisierungsgrad aufweisen. Aufgrund der verhältnismäßig geringen Anteile der Phosphatkomponente in der thermoplastischen Mischung ist dieser Wassergehalt bei der Bestimmung der Gewichtsteile an Phosphatkomponente in der Regel unbeachtlich und aufgrund der essentiellen Komponente (C) nicht schädlich.

Die Komponenten (A) bis (E) der erfindungsgemäßen Mischung werden ggf. unter Einbringung von thermischer und/oder mechanischer Energie vermischt und unter Einbringung von thermischer und/oder mechanischer Energie zu einer thermoplastischen Mischung verarbeitet.

Vorzugsweise erfolgt die Einbringung der mechanischen und der thermischen Energie gleichzeitig, z. B. durch Arbeiten unter erhöhter Temperatur und gleichzeitiger Ausübung von Scherkräften auf die zu plastifizierende thermoplastische Mischung auf Stärkebasis.

Im allgemeinen gilt, daß eine bessere Homogenität der Mischungen bei höheren Temperaturen resultiert. Allerdings sollen die Temperaturen nicht zu hoch liegen, um unnötige Verfärbungen oder Zersetzung der Formmassen zu vermeiden. In diesem Zusammenhang ist die thermoplastische Mischung der Erfindung in bevorzugter Abwandlung erhältlich durch Mischen bei Temperaturen im Bereich von > 60 °C bis 220 °C, vorzugsweise 80°C bis 180°C und besonders bevorzugt 100 °C bis 160°C.

Grundsätzlich steigt die Homogenisierung der Mischung mit der eingebrachten Leistung an. D. h. je höher die eingebrachte Leistung in das Mischaggregat ist, um so besser erfolgt die Homogenisierung der thermoplastischen Stärkemischung.

Es ist jedoch darauf zu achten, daß die über das Mischaggregat eingebrachte mechanische Energie nicht in einem zu großen Maße in thermische Energie umgesetzt wird, was zu einer unerwünschten Temperaturerhöhung führen kann. Zur Vermeidung können geeignete Kühlthermostate eingesetzt werden.

Eine weitere Modifikation der Erfindung sieht eine durch Mischen unter Einwirkung von stark scherenden Mischaggregaten erhältliche thermoplastische Mischung vor, wobei die in die Mischung eingebrachte Energie insbesondere an der Leistung der verwendeten Verarbeitungsmaschinen abgeleitet werden kann. So ist eine Verarbeitung vor allem mit Apparaturen möglich, deren Plastifizierungselement mit Drehmomenten ausgestattet sind, die im Bereich von 5 bis 300 Nm (1 Newton Meter) liegen. Als vorteilhaft hat sich eine Verarbeitung bei einem Drehmoment im Bereich von 10 bis 100 Nm erwiesen. Bevorzugt wird die Verarbeitung in einem Bereich des Drehmomentes von 20 bis 40 Nm.

Eine besonders günstige Aufnahme von thermischer und/oder mechanischer Energie durch die Mischung wird erreicht, wenn man die Bestandteile der Mischung gemäß der Erfindung in einer Kunststoffverarbeitungsmaschine, wie beispielsweise einem Extruder, Kneter oder ähnlichen Aggregaten mischt und homogenisiert.

Das Verfahren kann vorzugsweise auf Ein-oder Zweischneckenextrudern durchgeführt werden. Diese sind vorzugsweise aus einzelnen Gehäusen zusammengesetzt, die temperierbare Mäntel aufweisen. Die Gestaltung der Schnecken unterliegt keiner Beschränkung, es können Förderelemente mit oder ohne Schubkanten, Knetelemente und/oder Mischelemente vorhanden sein. Darüber hinaus ist es möglich und häufig vorteilhaft zumindest teilweise, d. h. abschnittsweise stauende oder rückfördernde Elemente im Extruder zu verwenden, um Verweilzeit und Mischungseigenschaften zu beeinflussen und zu steuern.

Im allgemeinen hat die Reihenfolge der Zumischung der Ingredienzen (A) bis (F) keinen eine besonderen Einfluß auf die Eigenschaften der erhaltenen thermoplastischen Mischung. Wird jedoch zusammen mit einer Stärkekomponente (B) eine Phosphatkomponente zugesetzt, hat es sich als vorteilhaft erwiesen, wenigstens das Mischen der Phosphatkomponente mit den Komponenten (A) und (B) unter Anwendung von thermischer und mechanischer Energie durchzuführen.

Dieses Vorgehen unterscheidet sich hinsichtlich Art und Wirkung deutlich vom bekannten Stand der Technik. Wurden bislang Phosphorsäuren oder ihre Salze oder Ester als Modifizierungsmittel bei der Herstellung von thermoplastischen Mischungen auf Stärkebasis verwendet, wurde ausschließlich und immer direkt das Stärkekorn modifiziert. Mit anderen Worten, die Modifizierung erfolgte vor Aufschluß, bzw. Destrukturierung des Korns infolge der Plastifizierung.

Im Gegensatz hierzu wird bei der beschriebenen Vorgehensweise gewährleistet, daß nicht nur die Oberfläche des Stärkekorns, sondern die Stärke in der Gesamtheit ihrer Moleküle, vorzugsweise am Stärkerückgrat, modifiziert werden kann. Dies führt zu Produkten mit vorteilhaften Eigenschaften.

Es wird angenommen, daß durch Zugabe der Phosphatkomponente während der Verarbeitung im Homogenisierungs- oder Mischaggregat, wie etwa im Kneter oder Extruder, unter alkalischen bis sauren Bedingungen die Reaktion mit Stärke, Stärkederivaten oder auch zugemischten Proteinen weitestgehend vermieden werden kann, so daß die Reaktion nur in einem untergeordnetem Ausmaß einer Vernetzung gleichkommt. D.h. im Vordergrund steht die Modifizierung des Polymerrückgrats.

Durch die Zugabe von Weichmachern, die per se ein hohes Verhältnis von Hydroxylgruppen oder anderen Wasserstoffbrücken ausbildenden Gruppen zu Kohlenstoffatomen aufweisen, kann unter geeigneter Reaktionsführung über die Reaktion des Phosphats auch eine Ankopplung des Weichmachers an das Stärkerückgrat erreicht werden. Dies führt letztlich - besonders während der Verarbeitung - zu einer Verringerung der Migration des Weichmachers aus der Mischung und schließt gleichzeitig jedoch den Plastifizierungseffekt des Weichmachers nicht aus, durch den die Destrukturierung der Stärke (Aufschluß des Stärkekorns) erst möglich wird. Diese Möglichkeit der Interpretation der ablaufenden Reaktionen, die zu den überraschend gefundenen Ergebnissen führen, schließt jedoch auch andere Interpretationsmöglichkeiten nicht aus.

Die erfindungsgemäße thermoplastische Formmasse läßt sich nach den bekannten Verarbeitungsverfahren zu Produkten verarbeiten. So kann sie z. B. in einem ersten Schritt granuliert oder pelletisiert werden.

Gegenstand der Erfindung ist somit auch ein Granulat, das durch Extrusion und Pelletisierung aus der thermoplastischen Mischung gemäß der Erfindung erhältlich ist.

Außerdem können entweder direkt oder durch erneutes thermoplastisches Verarbeiten des sich thermoplastisch verhaltenden Granulats biologisch gut abbaubare Formteile oder Folien mit verbesserten mechanischen Eigenschaften erhalten werden.

Schließlich gehört zur Erfindung insbesondere auch die Verwendung der thermoplastischen Mischungen zur Herstellung von Formteilen oder Folien.

Insgesamt decken die erfindungsgemäßen Produkte damit eine Vielzahl von Anwendungsmöglichkeiten ab. Hierzu gehören im einzelnen unter anderem Klebstoffadhäsive für Papier und Wellpappe, Formkörper, die durch Spritzguß hergestellt werden, vor allem Stäbe, Rohre, Flaschen, Kapseln, Granulate, Lebensmittelzusatzstoffe, Filme, als Überzüge oder freistehende Filme, auch als Laminate, vor allem Folien, Verpackungsmaterialien, Beutel, Retardmaterialien zur kontrollierten Freisetzung von Wirkstoffen im allgemeinen, insbesondere Pharmaka, Pestizide oder andere in der Agrokultur eingesetzte Wirkstoffe, Dünger, Aromastoffe etc. Dabei kann die Freigabe der aktiven Substanz aus Filmen, Folien, Preßlingen, Partikeln, Mikropartikeln, Stäbchen oder anderen Extrudaten oder sonstigen Formkörpern erfolgen.

Die aus der erfindungsgemäßen thermoplastischen Mischung erhaltenen Produkte, wie Formkörper oder Folien, sind im wesentlichen biokompatibel und gegebenenfalls eßbar, was den Weg zu eßbaren Verpackungen, also insbesondere Lebensmittelverpackungen, ebnet.

Unter Lebensmittelverpackungen sind dabei sowohl Umverpackungen zu verstehen, die mit dem Lebensmittel nur temporären Kontakt haben, als auch Verpackungen, wie Schläuche, Hüllen oder Überzüge, die an ihrer Innenoberfläche ständigen Kontakt mit dem Lebensmittel haben und daher auch bei der Nahrungsmittelaufnahme aufgenommen werden können. Die Verpackungen eignen sich daher neben anderen für Obst, Eier, Käse, Bonbonwaren, Kuchen, Kekse oder Brausetabletten, Getränke, Fleisch, Wurstwaren und Fleischbrät.

Der Einsatz der aus den thermoplastischen Formmassen gemäß der Erfindung erhältlichen Formkörper ist dabei nicht auf die Verwendung in Kombination mit temporären Produkten beschränkt, sondern kann auch auf den temporären Einsatz zum Schutz von Gebrauchsgegenständen und Investitionsgütern bei Transport oder Lagerung angewendet werden. Insbesondere ist hier an den Schutz vor klimatischen Einflüssen zu denken, wie sie etwa beim überseeischen Transport von Automobilen auftreten.

Weiter bevorzugte Anwendungen umfassen Absorber, Puder und dergleichen.

In einer besonderen Ausführungsform werden die thermoplastischen Mischungen gemäß der Erfindung zur Herstellung von Formkörpern zur kontrollierten Freigabe von Wirkstoffen, wie etwa Tabletten oder Dragees, verwendet.

Eine weitere zweckmäßige und besonders günstige Verwendung der thermoplastischen Mischung gemäß der Erfindung betrifft die Herstellung von Formkörpern, die sich zur Herstellung von massiven Formkörpern, Hohlkörpern oder Kombinationen davon eignen.

Noch eine herausragende Verwendung der erfindungsgemäßen thermoplastischen Mischung ist in der Herstellung von Folien zum Gebrauch in der Landwirtschaft angesiedelt.

In weiterer besonderer Abwandlung sieht die Erfindung die Verwendung der thermoplastischen Mischung zur Herstellung von Folien zum Gebrauch für Lebensmittelanwendungen vor.

Eine spezielle erfindungsgemäße Verwendung der thermoplastischen Mischung liegt in der Herstellung von Folien zum Gebrauch als Lebensmittelumverpackung.

Eine weiterhin bevorzugte günstige Verwendung der thermoplastischen Mischung gemäß der Erfindung ergibt sich bei der Herstellung von Folien zum Gebrauch als Lebensmittelverpackung mit vollständigem Flächenkontakt zum Lebensmittel.

Schließlich ist auch eine Verwendung der thermoplastischen Mischung gemäß der Erfindung besonders vorteilhaft bei der Flach- oder tubulare Folien zur Verwendung als Lebensmittelhüllen für Wurst und Käse hergestellt werden.

Zur besonderen Anpassung an den jeweiligen Verwendungszweck können der erfindungsgemäßen thermoplastischen Mischung oder den daraus erhaltenen Granulaten bei der Herstellung der Formkörper nach Bedarf geeignete Materialien zugesetzt werden.

Derartige Materialien sind an sich bekannt. Beispiele dafür sind Fasern, Vernetzungsmittel, Proteine, Hydrophobisierungsmittel, Gleitmittel, synthetische Kunststoffe etc.

Die Mengenangaben beziehen sich auf das Gewicht der eingesetzten Stärke, d.h. Gewicht der Komponente (A) und ggf. (B). Je nach Bedarf können diese Angaben jedoch variieren.

Beispielsweise können zur Erhöhung der mechanischen Festigkeit Fasern in einer Menge von 5- 70 Gew.-%, vorzugsweise 20-45 Gew.-%, wie Baumwollfasern, Hanffasern, Cellulose etc. beigemengt werden.

Als Vernetzungsmittel können dieselben wie vorstehend in Zusammenhang mit der Plastifizierung beschrieben verwendet werden. Bevorzugt sind z.B. Dicarbonsäuren, Dialdehyde, insbesondere Glyoxal und Glutardialdehyd, Diisocyanate und Diepoxide, z.B. Ethylenglykoldiglycidylether oder auch Polyphosphate.

Die Vernetzungsmittel tragen zur Verbesserung der Wasserbeständigkeit bei. Im allgemeinen werden sie in einer Menge von 0,1 bis 10 Gew.-%, vorzugsweise 0,5 - 3 Gew.-% verwendet.

Auch Proteine wie sie z.B. vorstehend beschrieben worden sind können zugesetzt werden, insbesondere Casein, Gelatine, Soja-, Weizen und Erbsenprotein. Die zugesetzte Menge ist im allgemeinen 2 - 40 Gew.-%, vorzugsweise 3 - 10 Gew.-%.

Als weitere Zusatzstoffe sind übliche Hydrophobisierungsmittel und/oder Gleitmittel zu nennen, die im allgemeinen in einer Menge von 2 - 12 Gew.-% vorzugsweise 3 - 6 Gew.-% eingesetzt werden.

Durch den Zusatz von beispielsweise Gleitmitteln kann die Schälbarkeit von Lebensmittelverpackungen, z.B. Wursthüllen, verbessert werden. Auch üben sie einen positiven Effekt auf die Wasserbeständigkeit aus.

Weichmacher, wie die vorstehend beschrieben, z.B. Glycerin oder Citronensäure, können in üblichen Mengen, z.B. 5 - 40 Gew.-%, vorzugsweise 5 - 20 Gew.-% zugesetzt werden.

Durch den Zusatz von Weichmachern läßt sich beispielsweise die Geschmeidigkeit von Verpackungen, insbesondere z.B. für Wursthüllen, erhöhen.

Als weitere mögliche Zusatzstoffe kommen synthetische Polymere in Frage. Geeignete Beispiele sind weiche und zähe Polyamide, Polyester, Polyolefine, Ethylen/Acrylsäureester/Maleinsäureanhydridcopolymere oder Polyvinylpyrrolidon.

Bevorzugte Polyolefine sind Hochdruckpolyethylen oder Polypropylen. Der Anteil an synthetischen Polymeren beträgt zweckmäßigerweise 5 - 50 Gew.-%, vorzugsweise 10 - 40 Gew.-%.

Die aus der erfindungsgemäßen thermoplastischen Mischung erhaltenen Formkörper können mit für aus Biopolymeren hergestellten Formkörpern oder Folien bekannten Maßnahmen bearbeitet oder kombiniert werden. Beispielsweise sind die für Cellulosehydrathüllen bekannten Imprägnierungen oder Beschichtungen auf die gemäß der Erfindung erhaltenen Formkörper bzw. Folien anwendbar. Dies betrifft insbesondere auch die Verwendung als Lebensmittelhüllen.

Die nachfolgenden Beispiele veranschaulichen den Gegenstand der Erfindung.

### Beispiele

### Beispiel 1

### In-vitro-Produktion von Glucanen mit partiell gereinigter Amylosucrase

Für die Expression einer extrazelluären Amylosucrase-Aktivität wurden E. coli-Zellen nach Standardmethoden mit dem Vektor pNB2 transformiert. YT-Medium (100 µg/ml Ampicillin) wurde mit einer Kolonie des transformierten Stammes angeimpft. Die Zellen wurden über Nacht bei 37°C unter ständiger Bewegung (Rotationsschüttler; 150-200 rpm) inkubiert. Anschließend wurden die Zellen abzentrifugiert (30 min, 4 °C, 5500 rpm, JA10 Beckmann-Rotor). Der Überstand wurde durch einen 0,2 µm Filter (Schleicher&Schuell) sterilfiltriert.
Anschließend wurde der Überstand unter Verwendung einer Amicon-Kammer (YM30-Membran mit einer Ausschlußgröße von 30 kDa, Fa. Amicon) unter Druck (p = 3 bar) 200-fach aufkonzentriert. Dieser konzentrierte Überstand wurde zu 50 ml Saccharosenlösung (5 % Saccharose in 50 mM Natrium-Citrat-Puffer pH 6.5) hinzugegeben. Der gesamte Ansatz wurde bei 37 °C inkubiert. Es kommt zur Bildung weißer unlöslicher Polysaccharide.

### Beispiel 2

### Scale-up der in-vitro-Produktion von 1,4-α-D-Polyglucan

In einem nach einer üblichen Methode sterilisierten (hier: Dampfsterilisation) 15 l Gefäß werden 10 l einer 20 %igen Saccharose Lösung gegeben. Der Enzymexktrakt, die Amylosucrase enthaltend, wird in einer Portion zugegeben. Die Enzymaktivität betrug in diesem Experiment 14,5 units, bestimmt nach der in Beispiel 3 beschriebenen Methode. Die Apparatur wird mit einem ebenfalls sterilisierten KPG-Rührer versehen. Das Gefäß wird verschlossen und bei 37°C inkubiert. Bereits nach einer Zeit von wenigen Stunden bilden sich weiße Partikel und Flocken. Die Reaktion wird nach einer Zeitdauer von 216 Stunden beendet. Der Niederschlag wird abfiltriert und zwei Mal mit Wasser gewaschen, um die niedermolekularen Zucker und nicht umgesetzte Saccharose von dem 1,4-α-D-Polyglucan abzutrennen. Anschließend wird erneut fünf Mal gewaschen. Die Waschwasser werden gesammelt und am Rotationsverdampfer zur Trockne gebracht. Es bleiben 90 g (Ausbeute 5 %, bezogen auf die eingesetzte Saccharose) Feststoff zurück, die oligomeren 1,4-α-D-Polyglucan Anteilen entsprechen. Der im Filter verbleibende Rückstand wird bei 40 °C im Trockenschrank unter Anlegung eines Vakuums getrocknet. Die Masse beträgt 786 g. Dies entspricht einer Ausbeute an 1,4-α-D-Polyglucan von 39 %. Der Rückstand wird wie beschrieben getrocknet. Die auf diese Weise erhaltenen 1,4-α-D-Polyglucane können direkt für die analytischen Untersuchungen und zur Herstellung von Blendgemischen eingesetzt.

### Beispiel 3

### Nachweis der Amylosucrase-Aktivität in den Kulturüberständen von transformierten E. coli-Zellen, die in Abwesenheit von Saccharose kultiviert wurden

Für die Expression einer extrazellulären Amylosucrase-Aktivität wurden E.coli-Zellen nach Standardmethoden mit dem Vektor pNB2 transformiert. YT-Medium (100µg/ml Ampicillin) wurde mit einer Kolonie des transformierten Stammes angeimpf. Die Zellen wurden über Nacht bei 37 °C unter ständiger Bewegung (Rotationsschüttler; 150-200 rpm) inkubiert. Anschließend wurden die Zellen abzentrifugiert (30 min, 4 °C, 5500 rpm, JA10 Beckmann-Rotor). Der Überstand wurde durch einen 0,2 µm Filter (Schleicher & Schuell) sterilfiltiert.

Der Nachweis einer Amylosucrase-Aktivität erfolgte
1) durch Inkubation des Überstandes auf einer saccharosehaltigen Agarplatte. Hierzu wurden 40 µl des Überstandes in ein ausgestanztes Loch auf einer Agarplatte (5 % Saccharose in 50 mM Natriumcitrat-Puffer bei pH 6,5) gegeben und für mindestens eine Stunde bei 37 °C inkubiert. Der Nachweis der Produkte der durch Amylosucrase katalysierten Reaktion erfolgte durch Anfärben mittels lodbedampfung. Vorhandene Reaktionsprodukte rufen eine Blaufärbung hervor;
2) oder durch gelelektrophoretische Auftrennung der Proteine des Überstandes in einem nativen Gel und Nachweis der Reaktionsprodukte im Gel nach Inkubation mit Saccharose. Hierzu wurden 40-80 µl des Überstandes auf einem 8 %igen nativen Polyacrylamidgel (0,375 M Tris bei pH 8,8) bei einer Spannung von 100 V gelelektrophoretisch aufgetrennt. Das Gel wurde anschließend zweimal 15 min mit ca. 100 ml 50 mM Natriumcitrat-Puffer (pH 6,5) äquilibriert und über Nacht bei 37 °C in Natriumcitrat-Puffer pH 6,5 / 5 % Saccharose inkubiert. Zur Sichtbarmachung der Reaktionsprodukte der durch Amylosucrase katalysierten Reaktion wurde das Gel in Lugolscher Lösung geschwenkt. Banden mit Amylosucrase-Aktivität weisen eine intensive Blaufärbung auf.

### Beispiel 4

### Charakterisierung der durch Amylosucrase synthetisierten Reaktionsprodukte aus

### Beispiel 1

Die in Bespiel 3 beschriebenen unlöslichen Reaktionsprodukte sind in 1 M NaOH löslich. Die Charakterisierung der Reaktionsprodukte erfolgte durch Messung des Absorptionsmaximums. Hierzu wurden ca. 100 mg der isolierten Reaktionsprodukte (Naßgewicht) in 200 µl 1 M NaOH gelöst und 1 : 10 mit H₂O verdünnt. Zu 100 µl dieser Verdünnung wurden 900 µl 0,1 M NaOH und 1 ml Lugolsche Lösung gegeben. Es wurde das Absorptionsspektrum zwischen 400 und 700 nm gemessen. Das Maximum liegt bei 605 nm (Absorptionsmaximum von Amylose: ca. 614 nm).
Eine HPLC-Analyse des Reaktionsansatzes von Beispel 3 auf einer CARBIOPAC PA 1-Säule (DIONEX) zeigte, daß neben den unlöslichen Produkten auch lösliche Produkte entstehen. Es handelt sich hierbei um kurzkettige Polysaccharide. Die Kettenlänge lag in diesem Fall zwischen ca. 5 und ca. 50 Glukoseeinheiten. In geringem Maße waren jedoch auch kürzere und längere Moleküle nachweisbar.
Mit den zur Verfügung stehenden Analysemethoden war es nicht möglich, Verzweigungen in den Syntheseprodukten nachzuweisen.

### Beispiel 5

### Charakterisierung der durch Amylosucrase synthetisierten wasserunlöslichen Reaktionsprodukte aus Beispiel 2

Es werden 2 mg des Polyglucans aus Beispiel 2 bei Raumtemperatur in Dimethylsulfoxid (DMSO) gelöst. Die Lösung wird durch einen 2 µm Filter filtriert und in eine Gelpermeationschromatographie Säule injiziert. Als Elutionsmittel wird DMSO verwendet. Die Signalintensität wird mittels eines RI-Detektor gemessen und gegen Pullulanstandards (Firma Polymer Standard Systems) ausgewertet. Die Flußrate beträgt 1.0 ml pro Minute.
Die Messung ergibt ein Zahlenmittel von 8.900 Dalton und ein Gewichtsmittel von 24.000 Dalton. Dies entspricht einer Polydispersität von 2,7.

### Beispiel 6

### Charakterisierung der durch Amylosucrase synthetisierten wasserlöslichen Reaktionsprodukte aus Beispiel 2

Die Charakterisierung der wasserlöslichen Bestandteile des mittels Amylosucrase in einer biokatalytischen Reaktion hergestellten 1,4-α-D-Polyglucan erfolgt mittels Matrix-Assisted Laser Desorption/lonization Mass Spektroskopy (MALDI-MS). Das verwendete Gerät ist ein Bruker Reflex II™ time-of-flight (TOF). Das Gerät arbeitet mit einem LSI Stickstoff Laser, der Pulse einer Dauer von 3 ns mit einer Energie von etwa 250 µJ bei einer Wellenlänge von 337 nm liefert. Der Laserstrahl wird auf eine Probe der Ausdehnung 50 µm x 100 µm fokussiert. Die resultierende Energie beträgt damit etwa 10 MW cm⁻². Die desorbierten lonen werden auf eine Energie von 35 keV beschleunigt. Die Probe wird im Reflectron-Modus gemessen, der die Bestimmung oligomerer Bestandteile erlaubt.
Die Probe wird folgendermaßen präpariert. 10 µl einer 10⁻⁴ molaren Lösung des Polymers in Tetrahydrofuran (THF) wird zu 10 µl einer 0,1 molaren Lösung der Matrix 1,8,9-Trihydroxyanthracen (Fa. Aldrich) in Tetrahydrofuran gegeben. Es wird 1 µl einer Lösung von 5 g des lonisierungsagenz Silbertrifluoracetat (Fa. Aldrich) in 1 l THF hinzugegeben. 1 µl der endgültigen Lösung wird auf das Target des Massenspektrometers gegeben und schnellstmöglich mittels Zufuhr eines Luftstromes getrocknet. Die Massenspektren werden als Mittel über eine Summe von 200 Laserpulsen bestimmt. Als innerer Standard können niedere- und oligomere Zucker verwendet werden. Im Fall des 1,4-α-D-Polyglucans werden Glucose, D-(+)-Maltose Monohydrat, Maltotriose, Maltotetraose, Maltopentaose und Maltohexose (Fa. Fluka) verwendet.
Die Messung ergibt eine Peakverteilung mit Bereich bis zu 4000 m/z (Masse durch Ladung). Maxima liegen sowohl im niedermolekularen Bereich (Monomer, Dimer) als auch um 1500 m/z. Die Wiederholungseinheit, die aus dem Abstand zweier benachbarter Peaks erhalten wird, beträgt 162 g/mol. Die Hochauflösung im niedermolekularen Bereich zeigt den intensivsten Peak bei 203 g/mol. Nach Abzug einer Monomereinheit verbleibt ein Rest von 41 g/mol. Da im 1,4-α-D-Polyglucan ein Wasserstoffatom und eine Hydroxylgruppe als Endgruppen auftreten, ist der verbleibende Rest von 23 g/mol (41 g/mol - 18 g/mol für Wasser) auf allgegenwärtiges Natrium zurückzuführen. Demnach wird der in der Biotransformation verwendete Puffer (Natriumcitrat) durch den Waschvorgang in der Fraktion der wasserlöslichen Polymeranteile angereichert.
Die Auswertung der Daten bei gegebener Unsicherheit durch die vorhandenen niedermolekularen Anteile ergibt für Mₙ einen Wert von ca. 1800 g/mol und für M_{w} von 2400.

### Beispiel 7

### Herstellung eines thermoplastisch verarbeitbaren Blendgemisches aus 1,4-α-D-Polyglucan und Poly-ε-caprolacton

Es wird ein handelsübliches Knetaggregat verwendet (Brabender Kneter). Das Knetaggregat wird auf 100 °C geheizt. 20 g 1,4-α-D-Polyglucan werden im Betriebszustand des Knetaggregats zugegeben. Anschließend werden 20 g Wasser zugegeben und mit dem vorgelegten Polymer homogenisiert. Nach ca. 5 Minuten werden 20 g Poly-ε-caprolacton (kommerziell erhältliches Tone P 787 Polymer der Fa.
Union Carbide Corporation) zugegeben und die Masse bis zur Homogenität geknetet. Dies ist nach ca. 20 Minuten der Fall. Die Masse wird entnommen, während das Gerät noch in beheiztem Zustand ist. Es handelt sich um ein weißes, nicht transparentes Produkt. Nach dem Erkalten kann die thermoplastische Masse z.B. zu Granulat weiterverarbeitet werden.

### Beispiel 8

### Herstellung eines thermoplastisch verarbeitbaren Blendgemisches aus 1,4-α-D-Polyglucan und Xanthan

Der Versuch wird wie in Beispiel 7 beschrieben durchgeführt. Die Mischung besteht aus 27 g 1,4-α-D-Polyglucan, 15 g Wasser, 15 g Glycerin und 3 g Xanthan (Gum Xanthan der Fa. Aldrich).
Die Entnahme erfolgt wie in Beispiel 7 beschrieben. Die Masse ist leicht beige gefärbt. Das Produkt kann direkt für die weitere Verarbeitung eingesetzt werden.

### Beispiel 9

### Herstellung eines thermoplastisch verarbeitbaren Blendgemisches aus 1,4-α-D-Polyglucan und Polyvinylalkohol

Der Versuch wird wie in Beispiel 7 beschrieben durchgeführt. Die Mischung besteht aus 30 g 1,4-α-D-Polyglucan, 12 g Wasser und 15 g Polyvinylalkohol (Mowiol 26-88 der Firma Hoechst AG).
Die Entnahme erfolgt wie in Beispiel 7 beschrieben. Die Masse ist weiß und nicht transparent. Das Produkt kann direkt für die weitere Verarbeitung eingesetzt werden. Da diese Mischungen als Nährboden für Pilze, etc. dienen können, hat sich darüber hinaus bewährt, der Mischung in geringem Maße (ca. 2 %) Sorbinsäure während des Knetvorgangs zuzusetzen.

### Beispiel 10

### Herstellung eines thermoplastisch verarbeitbaren Blendgemisches aus 1,4-α-D-Polyglucan und Carrageenan

Der Versuch wird wie in Beispiel 7 beschrieben durchgeführt. Die Mischung besteht aus 27 g 1,4-α-D-Polyglucan, 15 g Wasser, 15 g Glycerin und 3 g Carrageen (Fa. Sigma).
Die Entnahme erfolgt wie in Beispiel 7 beschrieben. Die Masse hat eine graue Farbe und ist klebrig. Das Produkt kann direkt für die weitere Verarbeitung eingesetzt werden.

### Beispiel 11

### Herstellung eines thermoplastisch verarbeitbaren Blendgemisches aus 1,4-α-D-Polyglucan und Gelatine

Die Verbindungen werden in einem Knetaggregat wie in Beispiel 7 hergestellt. Das Knetaggregat wird auf 100 °C geheizt. 6 g Gelatine (Typ II von der Fa. Sigma) werden im Betriebszustand des Knetaggregats zugegeben. Anschließend werden 6 g Wasser zugefügt und mit dem vorgelegten Polymer homogenisiert. Nach ca. 5 Minuten werden 18 g 1,4-α-D-Polyglucan zugegeben. Die Knetzeit bis zur Homogenisierung beträgt 10 Minuten. Die Mischung hat aufgrund der Gelatine eine hellbraune Färbung. Die Mischung wird entnommen, während das Gerät noch in beheiztem Zustand ist. Nach der Abkühlung kann die harte Masse weiteren Untersuchungen (z.B. Wasserbeständigkeit) zugeführt werden.

### Beispiel 12

### Herstellung einer Folie mittels Preßtechnik aus dem in Beispiel 7 hergestellten thermoplastischen 1,4-α-D-Polyglucanmischung

Die in Beispiel 7 beschriebene Masse wird zu einer Folie mittels Preßtechnik verarbeitet. Hierzu wird eine handelsübliche Presse der Fa. Schwabenthan (Polystat 300 S) verwendet. Die Presse wird auf 100 °C vorgeheizt. Die Probenpräparation erfolgt in einer "Sandwich-Technik" zwischen zwei gewebeverstärkte Folien aus Polytetrafluorethylen (Teflon™), die mit einem etwa 100 µm dicken metallischen Rahmen auf Abstand gehalten werden. Etwa 2 g der im Kneter hergestellten Masse werden bei der Präparation in Mitte der unteren Folie plaziert. Die Probe wird für 5 Minuten bei 100 °C und einem Druck von 1 t temperiert. Anschließend wird die Probe bei 100 °C für 5 Minuten und einem Druck von 10 t gepreßt. Dies entspricht aufgrund der Geometrie der verwendeten Presse einem Druck von 200 bar. Die Presse wird entlastet und die Probe wird in eine andere Presse zwecks Abkühlung überführt. Hierbei handelt es sich um eine wassergekühlte Presse der Fa. Robert Fuchs Hydraulische Maschinen und Werkzeuge. Während des Abkühlvorgangs über eine Zeit von 2 Minuten wird ein Druck von 50 bar angelegt. Im Anschluß kann die Probe entnommen werden, um sie für weitere Untersuchungen einzusetzen.

### Beispiel 13

### Herstellung eines thermoplastisch verarbeitbaren Blendgemisches aus 1,4-α-D-Polyglucan und einer weiteren Stärke

Der Versuch wird wie in Beispiel 7 beschrieben durchgeführt. Die Mischung besteht aus 27 g 1,4-α-D-Polyglucan, 15 g Wasser, 15 g Glycerin und 3 g Maisstärke (National Starch).
Die Entnahme erfolgt wie in Beispiel 7 beschrieben. Das Produkt kann direkt für die weitere Verarbeitung eingesetzt werden.

### Beispiel 14

### Herstellung eines thermoplastisch verarbeitbaren Blendgemisches aus 1,4-α-D-Polyglucan und kompostierbaren bioabbaubaren Verbindungen

Der Versuch wird wie in Beispiel 7 beschrieben durchgeführt. Die Mischung besteht aus 27 g 1,4-α-D-Polyglucan, 15 g Wasser, 15 g Glycerin und 10 g Mater-Bi (Fa. Novamont), Typ ZF02U. Die Entnahme erfolgt wie in Beispiel 7 beschrieben. Die Masse ist leicht beige gefärbt. Das Produkt kann direkt für die weitere Verarbeitung eingesetzt werden.

### Beispiel 15

### Herstellung einer Mischung aus 1,4-α-D-Polyglucan und Additiven zur weiteren Verarbeitung mittels eines Zweischneckenextruders

Es werden 1 kg Kartoffelstärke (Kartoffelmehl z.B. der Marke Toffena™ der Firma Südstärke) und 0,25 kg 1,4-α-D-Polyglucan miteinander gemischt und manuell homogenisiert. (Der Einsatz eines Mixers (z.B. normales Küchengerät ist für die beschriebenen Mengen ausreichend) bietet sich an, wenn die Korngrößen der verwendeten Polymere stark voneinander abweichen.) Anschließend wird langsam ein Gemisch aus 300 g Glycerin und 1 g Glyoxal (40 %ige wäßrige Lösung) zugegeben. Währenddessen wird das Gemisch manuell geknetet. Nach beendeter Zugabe und zu Beginn des Knetvorgangs ist die Masse stark klebrig und es bilden sich größere Agglomerate. Im lauf der Homogenisierung wird die Masse zunehmend trockener und feinkörniger, was auf die Absorption der polaren Additve durch die Stärke und Amylose zurückzuführen ist. Die auf diese Weise hergestellte Mischung kann direkt zur weiteren Verarbeitung an einem Extruder verwendet werden.

Der natürliche Wasseranteil der Stärke ist ausreichend für die Plastifizierung.

### Beispiel 16

### Herstellung von Extrusionsfolien aus 1,4-α-D-Polyglucan mit Kartoffelstärke, Weichmacher und Vernetzen mittels eines Zweischneckenextruders

Dieser Versuch wird mit der in Beispiel 15 hergestellten Polymermischung gefahren. Der Versuch wird in einem Zweischneckenextruder durchgeführt (Haake Rheomex PTW 25/28p). Bei den verwendeten Schnecken handelt es sich um die Standardausführung der konischen Variante. Der Extruder ist mit vier variabel ansteuerbaren Heizelementen versehen. Die Verarbeitungstemperatur beträgt in allen Fällen 140 °C. Die Temperaturverläufe werden on-line mittels der handelsüblichen Software aufgezeichnet. Die Massetemperatur an der Düse ist im Durchschnitt zehn Grad Celsius über der Temperatur der Heizelemente. Die Drehzahl beträgt 25 Umdrehungen pro Minute. Der Austritt des Extrudates erfolgt durch eine sog. Breitschlitzdüse mit den Abmessungen 100 mm Breite und 0,2 mm Höhe (Höhenverstellbarkeit zwischen 0,2 mm und 1,0 mm).
Der Extruder wird stark überfüttert gefahren, d.h. am Einzug wird Substanz in ausreichender Menge zur Verfügung gestellt. Über dem wird mittels eines Stempels die permanente Zufuhr gewährleistet. Es ist darauf zu achten, daß der Stofftransport möglichst gleichmäßig erfolgt. Der Stempel besteht aus hochleistungsfähigem Kunststoff (wahlweise Holz), um den Metallabrieb eines entsprechenden Werkzeugs auszuschließen.
Nach einer Vorlaufzeit von ca. 10 Minuten tritt das Extrudat zunächst milchig trüb und beigefarben aus der Düse aus. Anfangs ist der extrudierte Film sehr flexibel. Nach kurzer Zeit erstarrt der Film an der Luft. Er wird durch ein nachgeschaltetes Transportband weiterbefördert. Es kann bei dem Vorhandensein von Fehlstellen zum Abbrechen des extrudieren Bands kommen. Der extrudierte Film ist im warmen Zustand dehnbar, jedoch nimmt diese Eigenschaft mit dem Abkühlvorgang zusehends ab.
Die auf diese Weise erhaltenen Proben können einer weiteren Analytik, z.B. Ermittlung der Wasserbeständigkeit, mechanische Eigenschaften, ohne weitere Behandlung (Reinigung oder Veredelung) unterzogen werden.

### Beispiel 17

Herstellung von Extrusionsfolien aus 1,4-α-D-Polyglucan mit Kartoffelstärke und Weichmacher mittels eines Zweischneckenextruders

Der Versuch wird wie in Beispiel 16 beschrieben durchgeführt. Die verwendete Mischung, die analog Beispiel 15 hergestellt wurde, besteht aus 1 kg Kartoffelstärke (Kartoffelmehl z.B. der Marke Toffena™ der Firma Südstärke), 0,5 kg 1,4-α-D-Polyglucan (Amylose) und 500 g Glycerin.
Der Extruder wird unterfüttert gefahren, d.h. am Einzug wird die Mischung über einen Doppelschneckendosierer (geeignet für Pulver und Granulat, Fa. Haake) langsam und gleichmäßig zudosiert.
Bei dem extrudierten Produkt handelt es sich um einen glatten transparenten Film. Der Film ist in geringem Maße bernsteinfarben gefärbt und zeigt eine ausgesprochene Flexibilität. Nach einer Strecke von ca. 1 m auf dem Transportband und der damit einhergehenden Luftkühlung wird der Film auf einem entsprechenden Zusatzgerät (Walzenabzug mit integriertem Wickler, Fa. Haake) aufgewickelt. Der aufgewickelte Film läßt sich ohne zu zerbrechen zu einer planen Folie ausrollen. Weitere Untersuchungen können direkt an diesem Material durchgeführt werden.

### Beispiel 18

### Herstellung eines extrudierten zylindrischen Stranges aus 1,4-α-D-Polyglucan mit Erbsenstärke und einer Mischung aus Weichmachern und Vernetzen

Die in diesem Versuch verwendete Mischung wird in einem Knetaggregat vorbereitet. Das Volumen des Kneter beträgt etwa vier Liter. Das Knetaggregat wird auf 120 °C vorgeheizt (Dampfheizung). 0,8 kg Erbsenstärke und 0,2 kg 1,4-α-D-Polyglucan werden vorgelegt und 500 g Wasser wird portionsweise zugegeben. Die Zeitdauer bis zum Erreichen einer homogenen Masse beträgt ca. 20 Minuten. Anschließend werden 500 g Glycerin portionsweise zugegeben. Die Zeitdauer bis zum Erzielen einer Homogenität beträgt ebenfalls ca. 20 Minuten. Zum Schluß werden 100 g Glyoxal (40 %ige wäßrige Lösung) in einem Guß zugegeben. Die Masse wird für weitere 5 bis 10 Minuten geknetet. In dieser Zeit quillt die Masse schlagartig an. Die Masse wird dem Knetaggregat entnommen, mechanisch zerkleinert.
Der Versuch wird wie in Beispiel 16 beschrieben durchgeführt. Im Unterschied wird jedoch anstelle der Breitschlitzdüse eine Rundschlitzdüse vorgeschaltet. Hierbei handelt es sich um eine Metallvorrichtung, die eine zylindrische Öffnung aufweist und damit geeignet ist, einen Endlosstrang zu erzeugen. Der Durchmesser der Öffnung beträgt 0,5 mm. Die Temperatur am Einzug beträgt 90 °C. Die weiteren Heizelemente werden wie in Beispiel 12 mit 140°C betrieben. Der Extruder wird im überfütterten Zustand betrieben.
Der nach ca. 5 Minuten aus der konischen Düse tretende Strang ist bemsteinfarben bis dunkelbraun. Die Oberfläche ist angerauht und leicht trüb. An Bruchstellen des Strangs ist die Transparenz zu erkennen. Durch ein nach dem Transportband (Lufttrocknung) angeschlossene Granulieranlage kann der Strang in eine für die Weiterverarbeitung geeignete Form konditioniert werden.

### Beispiel 19

### Herstellung von Blasextrusionsfolien aus 1,4-α-D-Polyglucan Blendgemischen

Ein Blendgemisch, vorliegend als Granulat, kann wie folgt auf einer Blasextrusionsanlage verarbeitet werden.
Es ist zweckmäßig, die Anlage zunächst stationär mit Polypropylen (PP) und Niederdruckpolyethylen (LDPE) einzufahren und dann schrittweise die Temperatur auf maximal 160 °C herabzusenken. Bei laufender Maschine wird die 1,4-α-D-Polyglucanmischung als Granulat (Beispiel 7) oder als Pulver (Beispiel 15) zugefüttert. Dies wird durch eine volumetrische Dosiervorrichtung erreicht. Dabei wird ein reaktives Additiv, wie beispielsweise ein Reagenz zur Oberflächenmodifikation oder zur Vernetzung (z.B. Natriumpolyphosphat, Glyoxal etc.), zweckmäßigerweise parallel dazudosiert, um eine mögliche Beeinträchtigung der Thermoplastizität zu vermeiden. Der Vorlauf, der noch PP und LDPE enthält, wird verworfen.
Das thermoplastische Granulat wird nach den bekannten Verfahren ('double bubble' oder 'injected bubble') verarbeitet. Der Streckvorgang wird durch ein gasförmiges Druckpolster, bevorzugt Luft, herbeigeführt, wobei das Streckverhältnis in Längsund in Querrichtung im Bereich von 2 bis 4 liegt. Die Längsstreckung kann durch die Kraft des abziehenden Walzenpaares gezielt beeinflußt werden. Um die Dimensionsstabilität der Schlauchfolie zu verbessern, wird dem Extrudierschritt eine Thermofixierstrecke, mit heißer Luft als Wärmeträger, nachgeschaltet. Das Wickeln der biaxial gereckten Folien wird mit changierenden Wicklern durchgeführt.

## Patentansprüche

1. Thermoplastische Mischung auf Basis von Biopolymeren erhältlich durch Bereitstellen und Mischen von
(A) 100 Gewichtsteilen eines biokatalytisch erzeugten, wasserunlöslichen 1,4-α-D-Polyglucans mit einer Polydispersität zwischen 1,1 und 3 und einem Molekulargewicht M_{w} zwischen 1x10³ und 5x10⁴,
(B) bis zu 400 Gewichtsteilen eines thermoplastisch verarbeitbaren von (A) verschiedenen polymeren Materials,
(C) Wasser in einer Menge, die zur Plastifizierung der Mischung ausreicht,
(D) mindestens einen Weichmacher in einer Menge von 10 Gewichtsteilen bis zur Hälfte der Summe der Gewichtsteile (A) und (B), und
(E) gegebenenfalls bis zu ((A)+(B)) Gewichtsteilen weiterer üblicher Zusätze, wobei der Wassergehalt der Komponenten (A) und (B) rechnerisch auf Null korrigiert wurde.

2. Thermoplastische Mischung nach Anspruch 1, wobei das biokatalytisch erzeugte 1,4-α-D-Polyglucan durch Biotransformation mit einer Glykosyltransferase erhalten wird.

3. Thermoplastische Mischung nach Anspruch 2, wobei das biokatalytisch erzeugte 1,4-α-D-Polyglucan durch Biotransformation mit Amylosucrasen erhalten wird.

4. Thermoplastische Mischung nach Anspruch 2, wobei biokatalytisch erzeugte 1,4-α-D-Polyglucan durch Biotransformation mit Phosphorylasen erhalten wird.

5. Thermoplastische Mischung nach einem oder mehreren der vorhergehenden Ansprüche, wobei sie durch Mischen bei Temperaturen im Bereich von > 60 °C bis 200 °C erhältlich ist.

6. Thermoplastische Mischung nach einem oder mehreren der vorhergehenden Ansprüche, wobei sie durch Mischen unter Einwirkung von stark scherenden, Plastifizierungselemente aufweisenden Mischaggregaten erhältlich ist, wobei mit den Plastifizierungslementen Drehmomente im Bereich von 10 bis 100 Nm, vorzugsweise 20 bis 40 Nm, erzielbar sind.

7. Thermoplastische Mischung nach einem der vorhergehenden Ansprüche, wobei Wasser in einer Menge von einem Gewichtsteil bis zu Dreiviertel der Summe der Gewichtsteile (A) und (B) zugemischt ist.

8. Verfahren zur Herstellung einer thermoplastischen Mischung auf Basis von Biopolymeren, bei dem man
(A) 100 Gewichtsteile eines biokatalytisch erzeugten, wasserunlöslichen 1,4-α-D-Polyglucans mit einer Polydispersität zwischen 1,1 und 3 und einem Molekulargewicht M_{w} zwischen 1x10³ und 5x10⁴,
(B) bis zu 400 Gewichtsteile eines thermoplastisch verarbeitbaren von (A) verschiedenen polymeren Materials,
(C) Wasser in einer Menge, die zur Plastifizierung ausreicht,
(D) mindestens einen Weichmacher in einer Menge von 10 Gewichtsteilen bis zur Hälfte der Summe der Gewichtsteile (A) und (B), und
(E) gegebenenfalls bis zu ((A)+(B)) Gewichtsteilen weiterer üblicher Zusät-ze, wobei der Wassergehalt der Komponenten (A) und (B) rechnerisch auf Null korrigiert wurde,
bereitstellt und miteinander vermischt und unter Einbringung von thermischer und mechanischer Energie, vorzugsweise bei erhöhter Temperatur und gleichzeitiger Ausübung von Scherkräften, plastifiziert.

9. Granulat erhältlich aus der thermoplastischen Mischung gemäß den Ansprüchen 1 bis 7 durch Extrusion und Pelletisierung.

10. Biologisch abbaubares Formteil oder Folie aufweisend die thermoplastische Mischung gemäß den Ansprüchen 1 bis 7.

11. Verwendung der thermoplastischen Mischung gemäß den Ansprüchen 1 bis 7 zur Herstellung von Formteilen oder Folien.

12. Verwendung der thermoplastischen Mischung gemäß den Ansprüchen 1 bis 7 zur Herstellung von Formkörpern zur kontrollierten Freigabe von Wirkstoffen.

13. Verwendung der thermoplastischen Mischung gemäß den Ansprüchen 1 bis 7 zur Herstellung von Formkörpern zur Herstellung von massiven Formkörpern, Hohlkörpern oder Kombinationen davon.

14. Verwendung der thermoplastischen Mischung gemäß den Ansprüchen 1 bis 7 zur Herstellung von Folien zum Gebrauch in der Landwirtschaft.

15. Verwendung der thermoplastischen Mischung gemäß den Ansprüchen 1 bis 7 zur Herstellung von Folien zum Gebrauch in der Lebensmittelanwendung.

16. Verwendung der thermoplastischen Mischung gemäß den Ansprüchen 1 bis 7 zur Herstellung von Folien zum Gebrauch als Lebensmittelumverpackung.

17. Verwendung der thermoplastischen Mischung gemäß den Ansprüchen 1 bis 7 zur Herstellung von Folien zum Gebrauch als Lebensmittelverpackung mit vollständigem Flächenkontakt zum Lebensmittel.

18. Verwendung der thermoplastischen Mischung gemäß den Ansprüchen 1 bis 7 zur Herstellung von Flach- oder tubularen Folien zur Verwendung als Lebensmittelhüllen für Wurst und Käse.

19. Verwendung der thermoplastischen Mischung gemäß Ansprüchen 1 bis 7 zur Herstellung von temporären Schutzfolien.

20. Verwendung von biokatalytisch erzeugten 1,4-α-D-Polyglucan zur Herstellung einer thermoplastischen Mischung gemäß einem der Ansprüche 1 bis 7.

## Claims

1. Thermoplastic mixture based upon bio-polymers obtainable by the preparation and mixing of
(A) 100 parts by weight of a water-insoluble 1,4-α-D-polyglucane produced bio-catalytically which has a polydispersity of between 1.1 and 3 and a molecular weight M_{w} of between 1 x 10³ and 5 x 10⁴,
(B) up to 400 parts by weight of a material capable of being processed thermoplastically and different from (A),
(C) water in sufficient quantity to render the mixture workable,
(D) at least one plasticiser in a quantity of between 10 parts by weight and a maximum of half the total parts by weight of the components (A) and (B), and
(E) if required, up to ((A) +(B)) parts by weight of additional customary additives after reducing the water content of the components (A) and (B) to zero for calculation purposes.

2. Thermoplastic mixture in accordance with claim 1, whereby the 1,4-α-D-polyglucane produced bio-catalytically is obtained by bio-transformation using a glycosyltransferase.

3. Thermoplastic mixture in accordance with claim 2, whereby the 1,4-α-D-polyglucane produced bio-catalytically is obtained by bio-transformation using amylosucrases.

4. Thermoplastic mixture in accordance with claim 2, whereby the 1,4-α-D-polyglucane produced bio-catalytically is obtained by bio-transformation using phosphorylases.

5. Thermoplastic mixture in accordance with one or more of the foregoing claims, whereby it is obtained by mixing at temperatures in the range between > 60°C and 200 °C.

6. Thermoplastic mixture in accordance with one or more of the foregoing claims whereby it is obtained by mixing, under the influence of strong shear forces, with mixing equipment exhibiting plasticising elements, which elements are capable of generating between 10 and 100 Nm, preferably between 20 and 40 Nm.

7. Thermoplastic mixture in accordance with one of the foregoing claims, whereby water is added and mixed, the quantity in terms of parts by weight being up to three-quarters of the total parts by weight of (A) and (B).

8. Procedure for the manufacture of a thermoplastic mixture based upon bio-polymers whereby
(A) 100 parts by weight of a water-insoluble 1,4-α-D-polyglucane produced bio-catalytically which has a polydispersity of between 1.1 and 3 and a molecular weight M_{w} of between 1 x 10³ and 5 × 10⁴,
(B) up to 400 parts by weight of a polymeric material capable of being processed thermoplastically and different from (A),
(C) water in sufficient quantity to render the mixture workable
(D) at least one plasticiser in a quantity of between 10 parts by weight and a maximum of half the total parts by weight of (A) and (B), and
(E) if required, up to ((A) +(B)) parts by weight of additional customary additives after reducing the water content of (A) and (B) to zero for calculation purposes are prepared and mixed together and then plasticised by the input of thermal and mechanical energy, preferably at an elevated temperature accompanied simultaneously by the application of shear forces.

9. Granulate obtainable by extrusion and pelletising of the thermoplastic mixture in accordance with claims 1 to 7.

10. Biologically-degradable shaped body or film made from the thermoplastic mixture in accordance with the claims 1 to 7.

11. Use of the thermoplastic mixture in accordance with the claims 1 to 7 for the manufacture of shaped bodies or films.

12. Use of the thermoplastic mixture in accordance with claims 1 to 7 for the manufacture of shaped bodies for the controlled release of active agents.

13. Use of the thermoplastic mixture in accordance with the claims 1 to 7 for the manufacture of shaped bodies, for the manufacture of solid shaped bodies, hollow bodies or combinations thereof.

14. Use of the thermoplastic mixture in accordance with the claims 1 to 7 for the manufacture of films for use in agriculture.

15. Use of the thermoplastic mixture in accordance with the claims 1 to 7 for the manufacture of films for use in connection with foodstuffs.

16. Use of the thermoplastic mixture in accordance with the claims 1 to 7 for the manufacture of films for use in the packaging of foodstuffs.

17. Use of the thermoplastic mixture in accordance with the claims 1 to 7 for the manufacture of films for use in the packaging of foodstuffs involving full surface contact with the foodstuff.

18. Use of the thermoplastic mixture in accordance with the claims 1 to 7 for the manufacture of flat or tubular films for use as outer-skins for foodstuffs, particularly sausage and cheese products.

19. Use of the thermoplastic mixture in accordance with the claims 1 to 7 for the manufacture of temporary protective films.

20. Use of bio-catalytically produced 1,4-α-D-polyglucane for the manufacture of a thermoplastic mixture in accordance with one of claims 1 to 7.

## Revendications

1. Mélange thermoplastique à base de biopolymères que l'on peut obtenir par préparation et mélange de
(A) 100 parties en masse d'un 1,4-α-D-polyglucane insoluble dans l'eau, préparé par biocatalyse, présentant une polydispersité comprise entre 1,1 et 3 et une masse moléculaire M_{w} comprise entre 1x10³ et 5x10⁴,
(B) jusqu'à 400 parties en masse d'une matière polymère différente de (A) que l'on peut traiter par des techniques thermoplastiques,
(C) eau dans une quantité qui est suffisante pour la plastification du mélange,
(D) au moins un plastifiant dans une quantité de 10 parties en masse jusqu'à la moitié de la somme des parties en masse de (A) et (B), et
(E) éventuellement jusqu'à ((A)+(B)) parties en masse d'autres additifs usuels, la teneur en eau des composants (A) et (B) étant corrigée à zéro par calcul.

2. Mélange thermoplastique selon la revendication 1, le 1,4-α-D-polyglucane est obtenu par biotransformation par une glycosyltransférase.

3. Mélange thermoplastique selon la revendication 2, le 1,4-α-D-polyglucane est obtenue par biotransformation par des amylosucrases.

4. Mélange thermoplastique selon la revendication 2, le 1,4-α-D-polyglucane est obtenu par biotransformation par des phosphorylases.

5. Mélange thermoplastique selon une ou plusieurs des revendications précédentes, que l'on peut obtenir par mélange à une température dans le domaine de >60°C à 200°C.

6. Mélange thermoplastique selon une ou plusieurs des revendications précédentes, que l'on peut obtenir par mélange au moyen de groupes de mélange présentant des éléments de plastification exerçant un fort effet de cisaillement, en pouvant obtenir à l'aide des éléments de plastification des couples dans le domaine de 10 à 100 Nm, de préférence de 20 à 40 Nm.

7. Mélange thermoplastique selon l'une des revendications précédentes, l'eau étant mélangée dans une quantité de 1 partie en masse jusqu'à trois quarts de la somme des parties en masse de (A) et (B).

8. Procédé de préparation d'un mélange thermoplastique à base de biopolymères, dans lequel on prépare et mélange
(A) 100 parties en masse d'un 1,4-α-D-polyglucane insoluble dans l'eau, préparé par biocatalyse, présentant une polydispersité comprise entre 1,1 et 3 et une masse moléculaire M_{w} comprise entre 1x10³ et 5x10⁴,
(B) jusqu'à 400 parties en masse d'une matière polymère différente de (A) que l'on peut traiter par des techniques thermoplastiques,
(C) eau dans une quantité qui est suffisante pour la plastification du mélange,
(D) au moins un plastifiant dans une quantité de 10 parties en masse jusqu'à la moitié de la somme des parties en masse de (A) et (B), et
(E) éventuellement jusqu'à ((A)+(B)) parties en masse d'autres additifs usuels, la teneur en eau des composants (A) et (B) étant corrigée à zéro par calcul,
et on le plastifie en apportant de l'énergie thermique et de l'énergie mécanique, de préférence à une température élevée et sous l'effet simultané de forces de cisaillement.

9. Granulé que l'on peut obtenir par mélange thermoplastique selon les revendications 1 à 7 par extrusion et pastillage.

10. Profilé ou feuille biodégradable présentant le mélange thermoplastique selon les revendications 1 à 7.

11. Utilisation du mélange thermoplastique selon les revendications 1 à 7 pour la préparation de profilés ou de feuilles.

12. Utilisation du mélange thermoplastique selon les revendications 1 à 7, pour la préparation de corps moulés pour la libération contrôlée de principes actifs.

13. Utilisation du mélange thermoplastique selon les revendications 1 à 7, pour la préparation de corps moulés, pour la préparation de corps moulés massifs, de corps creux ou leurs combinaisons.

14. Utilisation du mélange thermoplastique selon les revendications 1 à 7, pour la préparation de feuilles pour des utilisations en agriculture.

15. Utilisation du mélange thermoplastique selon les revendications 1 à 7, pour la préparation de feuilles pour des utilisations en industries alimentaires.

16. Utilisation du mélange thermoplastique selon les revendications 1 à 7, pour la préparation de feuilles pour des utilisations comme emballages de produits alimentaires.

17. Utilisation du mélange thermoplastique selon les revendications 1 à 7, pour la préparation de feuilles pour des utilisations comme emballages de produits alimentaires avec un contact de surface complet avec le produit alimentaire.

18. Utilisation du mélange thermoplastique selon les revendications 1 à 7, pour la préparation de feuilles planes ou tubulaires pour des utilisations comme enveloppes de produits alimentaires tels que le fromage et la charcuterie.

19. Utilisation du mélange thermoplastique selon les revendications 1 à 7, pour la préparation de feuilles de protection temporaire.

20. Utilisation de 1,4-α-D-polyglucane préparé par biocatalyse pour la préparation du mélange thermoplastique selon l'une des revendications 1 à 7.
